# DEMANDE DE BREVET EUROPEEN

(11) **EP 0 560 688 A1**
(43) Date de publication de la demande: **15.09.1993**
(21) Numéro de dépôt: 93400640.4
(22) Date de dépôt: 12.03.1993
(51) Int. Cl.: B21B 37/16, B21B 37/00, G05B 13/02

(54) **Dispositif de commande d'un outil d'écrouissage par laminage léger d'une tôle**

(30) Priorité: 13.03.1992 FR 9203051
(71) Demandeur: SOLLAC, F-92800 Puteaux (FR)
(72) Inventeur: Couriot, Eric, F-57100 Thionville (FR); Bresson, Patrick, F-57050 Le Ban Saint Martin (FR); Bello, Philippe, F-57100 Thionville (FR); Onno, Françoise, F-75000 Metz (FR); Perisse, Rémy, F-92150 Suresnes (FR); Alexandre, Frédéric, F-54000 Nancy (FR); Hatton, Jean-Paul, F-54000 Nancy (FR)
(74) Mandataire: Habasque, Etienne Joel Jean-François

(57) **Abrégé**

Ce dispositif de commande d'un outil d'écrouissage par laminage léger d'une tôle, du type comportant des moyens (13) d'application d'une force de laminage sur la tôle, dont le fonctionnement est piloté par une boucle de régulation (6) comprenant des moyens (7) d'entrée d'une valeur de consigne de force de laminage, des moyens (8) de mesure d'au moins un paramètre réel caractéristique de l'écrouissage de la tôle en sortie d'outil, des moyens (9) de comparaison dudit paramètre réel à une valeur de référence prédéterminée (10) et des moyens (11,12) de correction de la valeur de consigne en fonction du résultat de la comparaison, est caractérisé en ce que les moyens d'entrée (7) de la valeur de consigne comprennent un premier calculateur neuronal de force de laminage, recevant en entrée des paramètres représentatifs de la tôle, en entrée et en sortie d'outil et des paramètres représentatifs des conditions de fonctionnement de l'outil.

## Description

La présente invention concerne un dispositif de commande d'un outil d'écrouissage par laminage léger d'une tôle.

Ces outils d'écrouissage sont également connus sous le nom de " skin-pass " et sont utilisés à la fin de la filière de production de l'acier.

Ainsi, après avoir été fondu, coulé, laminé à chaud, c'est à dire écrasé entre deux cylindres, et stocké en bobine, l'acier est décapé à l'acide, laminé à froid, puis recuit.

Après cette opération de recuit, cet acier présente un palier de limite d'élasticité qui doit être éliminé par écrouissage. Les bobines sont ensuite conditionnées puis expédiées.

L'écrouissage consiste à allonger très légèrement la tôle (1% en moyenne) par combinaison d'efforts de pression et de traction destinés à :
- supprimer le palier de limite élastique afin que l'emboutissage de la tôle soit plus facile et de meilleure qualité;
- imprimer sur la tôle la rugosité voulue; et
- corriger les éventuels défauts de planéité résultant du laminage.

Ces outils d'écrouissage comprennent des moyens d'application d'une force de laminage sur la tôle et des moyens d'application d'une force de cambrage sur celle-ci.

Le fonctionnement de ces différents moyens d'application de forces est piloté par des boucles de régulation comprenant des moyens d'entrée d'une valeur de consigne de force de laminage ou de cambrage, des moyens de mesure d'au moins un paramètre réel caractéristique de l'écrouissage ou de la planéité de la tôle en sortie d'outil, des moyens de comparaison du paramètre réel à une valeur de référence prédéterminée et des moyens de correction de la valeur de consigne en fonction du résultat de cette comparaison.

Les préréglages c'est à dire les valeurs de consigne que l'on désire déterminer pour ces boucles, sont donc la force de cambrage à l'engagement, c'est à dire au début de l'écrouissage, permettant d'obtenir la planéité voulue et la force de laminage à plein régime, permettant d'obtenir l'allongement désiré.

Ces préréglages peuvent s'évaluer en faisant fonctionner l'outil pour rattraper l'erreur commise.

Il existe également dans l'état de la technique des calculateurs permettant de déterminer ces valeurs de consigne. Ces calculateurs sont en fait des calculateurs d'estimation de force à base de modèles physiques.

L'util isation de ce type de calculateur et de modèles physiques se traduit par une limitation du nombre des paramètres d'entrée et une précision relativement faible de détermination des valeurs de consigne et donc de pilotage de l'outil d'écrouissage.

Le but de l'invention est donc de résoudre ces problèmes en proposant un dispositif de commande d'un outil d'écrouissage, qui soit simple, fiable et permettant de prendre en compte un grand nombre de paramètres d'entrée pour le calcul des valeurs de consigne afin d'obtenir une bonne précision de pilotage de l'outil.

A cet effet, l'invention a pour objet un dispositif de commande d'un outil d'écrouissage par laminage léger d'une tôle, du type comportant des moyens d'application d'une force de laminage sur la tôle, dont le fonctionnement est piloté par une boucle de régulation comprenant des moyens d'entrée d'une valeur de consigne de force de laminage, des moyens de mesure d'au moins un paramètre réel caractéristique de l'écrouissage de la tôle en sortie d'outil, des moyens de comparaison dudit paramètre réel à une valeur de référence prédéterminée et des moyens de correction de la valeur de consigne en fonction du résultat de la comparaison, caractérisé en ce que les moyens d'entrée de la valeur de consigne de force de laminage comprennent un premier calculateur neuronal de force de laminage, recevant en entrée des paramètres représentatifs de la tôle, en entrée et en sortie d'outil, et des paramètres représentatifs des conditions de fonctionnement de l'outil.

Avantageusement, l'outil d'écrouissage comporte également des moyens d'application d'une force de cambrage sur la tôle, dont le fonctionnement est piloté par une boucle de régulation comprenant des moyens d'entrée d'une valeur de consigne de force de cambrage, des moyens de mesure d'au moins un paramètre réel caractéristique de la planéité de la tôle en sortie d'outil, des moyens de comparaison du paramètre réel à une valeur de référence prédéterminée et des moyens de correction de la valeur de consigne en fonction du résultat de la comparaison et les moyens d'entrée de la valeur de consigne de force de cambrage comprennent un second calculateur neuronal de force de cambrage, recevant en entrée des paramètres représentatifs de la tôle, en entrée et en sortie de l'outil, des paramètres représentatifs des conditions de fonctionnement de l'outil et la force de laminage délivrée par le premier calculateur neuronal de force de laminage.

Selon un mode de réalisation, le ou chaque calculateur neuronal est un calculateur à rétropropagation du gradient.

L'invention sera mieux comprise à l'aide de la description qui va suivre, donnée uniquement à titre d'exemple et faite en se référant aux dessins annexés, sur lesquels :
- les Fig.1 et 2 représentent des vues schématiques respectivement de face et de côté d'un outil d'écrouissage;
- la Fig.3 représente un schéma synoptique d'une boucle de régulation du fonctionnement des moyens d'application d'une force de cambrage ou de laminage sur une tôle; et
- la Fig.4 représente un schéma synoptique des calculateurs neuronaux de force de laminage et de cambrage entrant dans la constitution d'un dispositif selon l'invention.

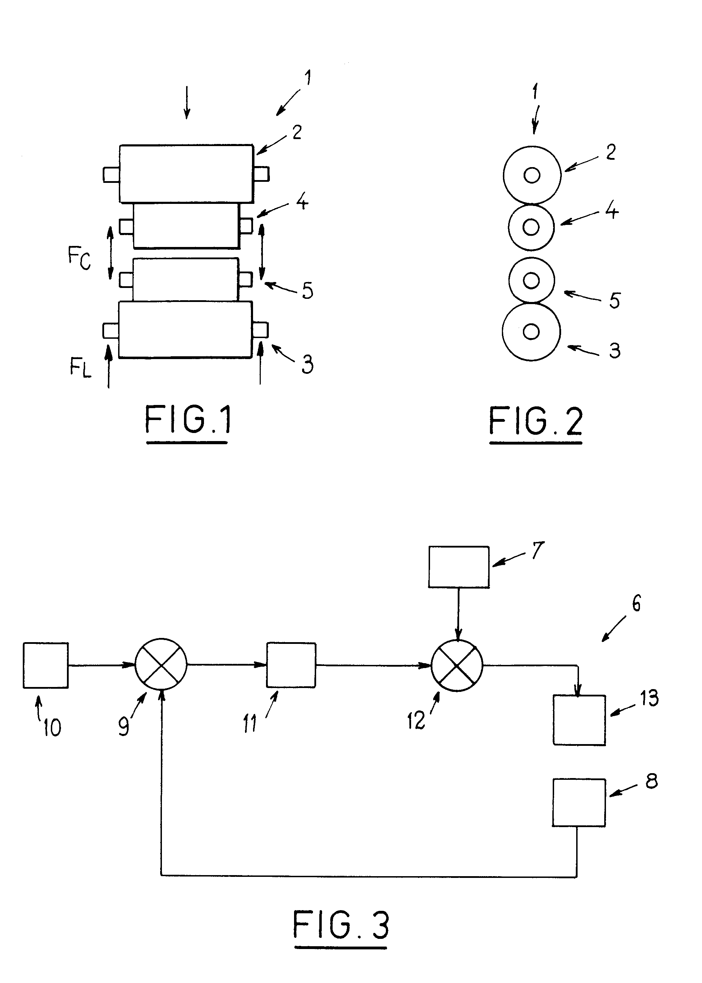

Ainsi qu'on peut le voir sur les figures 1 et 2, un outil d'écrouissage désigné par la référence générale 1 sur ces figures, comporte de manière connue en soi, deux cylindres de soutien 2 et 3 entre lesquels sont interposés deux cylindres de travail 4 et 5.

De manière connue en soi, une force de laminage F_{L} est appliquée sur les cylindres de soutien pour obtenir un écrouissage de la tôle passant entre les cylindres de travail.

Egalement de manière connue en soi, une force de cambrage F_{c} peut être appliquée sur les cylindres de travail pour corriger la planéité de la tôle.

Ces outils d'écrouissage également connus sous le nom de "skin-pass", sont bien connus dans l'état de la technique et ne seront pas décrits plus en détail par la suite.

On a représenté sur la Fig.3, une boucle de régulation permettant de piloter le fonctionnement de ces moyens d'application de force de laminage ou de cambrage.

C'est ainsi que la boucle de régulation désignée par la référence générale 6 sur cette figure 3, comporte des moyens 7 d'entrée d'une valeur de consigne de force de laminage ou de cambrage, des moyens 8 de mesure d'au moins un paramètre réel caractéristique de l'écrouissage ou de la planéité, respectivement, de la tôle en sortie d'outil, des moyens 9 de comparaison de ce paramètre réel à une valeur de référence prédéterminée, entrée dans cette boucle par des moyens d'établissement 10 correspondants et des moyens de correction 11 et 12 de la valeur de consigne en fonction du résultat de cette comparaison pour piloter des moyens 13 d'application de la force de laminage ou de cambrage, respectivement, sur les cylindres de soutien ou les cylindres de travail de l'outil.

Selon l'invention, et en ce qui concerne une boucle de régulation du fonctionnement des moyens d'application d'une force de laminage sur la tôle, les moyens d'entrée 7 de la valeur de consigne de force de laminage comprennent un premier calculateur neuronal de force de laminage recevant en entrée, comme cela sera décrit plus en détail par la suite, des paramètres représentatifs de la tôle en entrée et en sortie de l'outil et des paramètres représentatifs des conditions de fonctionnement de l'outil.

Avantageusement et pour ce qui concerne une boucle de régulation du fonctionnement des moyens d'application d'une force de cambrage sur la tôle, les moyens d'entrée de la valeur de consigne de force de cambrage comprennent un second calculateur neuronal de force de cambrage, recevant en entrée des paramètres représentatifs de la tôle en entrée et en sortie de l'outil, des paramètres représentatifs des conditions de fonctionnement de l'outil et la force de laminage délivrée par le calculateur neuronal de force de laminage.

On notera que les moyens de mesure du paramètre réel caractéristique de l'écrouissage de la tôle en sortie d'outil, intégrés dans la boucle de régulation du fonctionnement des moyens d'application d'une force de laminage sur la tôle, peuvent être constitués par des moyens de mesure du taux d'allongement de cette tôle, de type connu en soi.

Les moyens correspondants de la boucle de régulation du fonctionnement des moyens d'application de la force de cambrage sur la tôle sont quant à eux des moyens de mesure de la planéité de celle-ci en sortie d'outil.

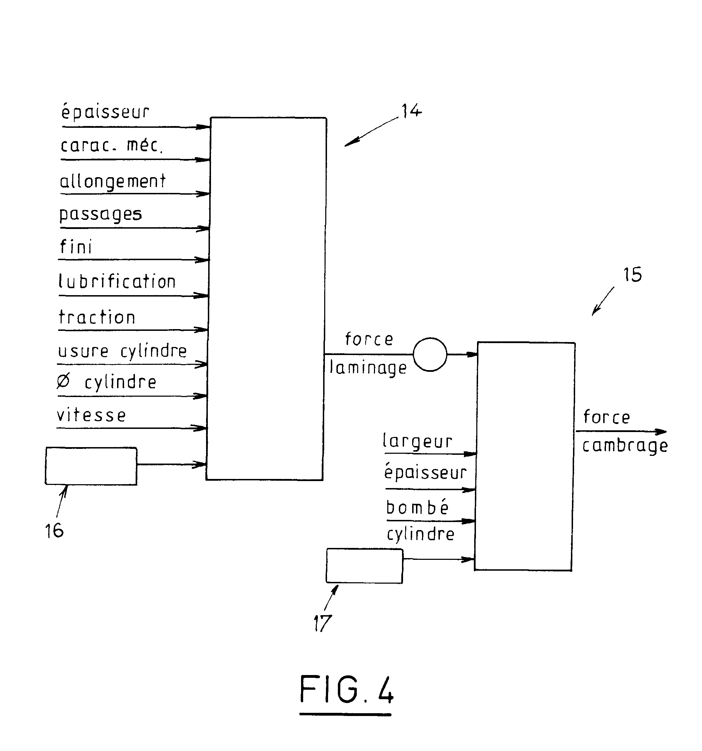

Sur la Fig.4, on a représenté un schéma synoptique de ces calculateurs neuronaux.

Le premier calculateur neuroral de force de laminage est désigné par la référence générale 14 et le second calculateur neuronal de force de cambrage est désigné par la référence générale 15.

Ces calculateurs neuronaux sont en fait des calculateurs multicouches comportant une couche de neurones d'entrée, au moins une couche cachée de neurones et une couche de neurones de sortie.

Par ailleurs, ces calculateurs sont de préférence, des calculateurs à rétropropagation du gradient.

En fait, ces calculateurs peuvent être constitués par tout calculateur approprié dans lequel est chargé un logiciel du type NEURALWORKS, commercialisé par la société NEURALWARE, ce logiciel incorporant le principe de rétropropagation du gradient et étant appliqué aux modèles multicouches du type PER-CEPTRON.

Les neurones définis dans ce type de logiciels, sont les éléments de base d'un système central et chacun d'eux assure plusieurs fonctions :
- de réception des signaux provenant des neurones voisins;
- d'intégration de ces signaux pour engendrer un signal de sortie; et
- de transmission de ce signal de sortie vers un neurone voisin.

Chaque neurone formel effectue en fait une sommation, pondérée par des poids, des valeurs qui arrivent d'autres neurones par exemple, puis réalise une corrélation du résultat de cette sommation avec une fonction de seuil, avant d'assurer sa transmission vers d'autres neurones.

Le problème majeur de ce type de réseau neuronal consiste à déterminer les poids des connexions entre ces neurones.

Les neurones formels sont organisés en couches dans le dispositif selon l'invention dans la mesure où cette organisation est imposée par la méthode de rétropropagation du gradient permettant de calculer les poids mentionnés précédemment.

Chaque couche est composée de neurones recevant uniquement des signaux provenant de neurones de la couche précédente et émet des signaux uniquement vers des neurones de la couche suivante.

Aucune connexion intracouche n'est permise.

On notera que la fonction de seuil utilisée par la méthode de rétropropagation du gradient doit être continue et est généralement une sigmoïde.

La méthode de rétropropagation du gradient est une méthode bien connue dans l'état de la technique et ne sera donc pas exposée dans le détail.

Cette méthode permet de résoudre l'un des principaux problèmes des réseaux de neurones, qui est la détermination du poids à attribuer à chaque connexion.

La mise en oeuvre d'un calculateur neuronal de ce type, commence par une phase d'apprentissage de celui-ci.

Cette phase d'apprentissage se décompose comme suit :
- fonctionnement du réseau en reconnaissance pour obtenir un résultat en fonction d'une entrée. Dans ce mode de fonctionnement, le calcul se réalise de l'entrée vers la sortie (propagation);
- comparaison de ce résultat avec celui que l'on aurait voulu obtenir, puis réajustement des poids des connexions afin de se rapprocher de la sortie désirée. Le calcul s'effectue dans ce cas de la sortie vers l'entrée et on dit que l'on rétropropage l'erreur.

Ces deux étapes sont répétées autant de fols qu'il est jugé nécessaire sur des exemples différents.

Ainsi, la méthode d'apprentissage utilisée est celle de la rétropropagatlon du gradient qui réajuste les poids des connexions entre les neurones en fonction de l'erreur commise.

Cet apprentissage des calculateurs neuronaux étant bien connu dans l'état de la technique, et ne présentant pas de difficultés particulières, on ne le décrira pas plus en détail par la suite.

Comme on peut le voir sur la figure 4, les paramètres représentatifs de la tôle en entrée et en sortie de l'outil, introduits dans le premier calculateur neuronal de force de laminage, comprennent au moins les paramètres suivants :
- l'épaisseur de la tôle en entrée d'outil;
- les caractéristiques mécaniques de la tôle en entrée d'outil;
- l'allongement désiré de la tôle en sortie de l'outil; et
- le fini de la tôle en sortie d'outil.

Les paramètres représentatifs des conditions de fonctionnement de l'outil, introduits également dans le premier calculateur neuronal de force de laminage, comprennent au moins les paramètres suivants :
- le nombre de passages de la tôle dans l'outil;
- les conditions de lubrification de celle-ci lors de son passage dans l'outil;
- les paramètres représentatifs de la géométrie initiale de l'outil, c'est à dire par exemple le diamètre des cylindres;
- les caractéristiques d'usure de l'outil;
- la vitesse de travail de celui-ci; et
- la force de traction exercée sur la tôle.

Ces différents paramètres représentatifs de la tôle et des conditions de fonctionnement de l'outil permettent au premier calculateur neuronal de déterminer la force de laminage optimale à appliquer par les moyens correspondants de l'outil sur la tôle, cette force étant introduite dans la boucle de régulation correspondante en tant que valeur de consigne.

Par ailleurs, les paramètres représentatifs de la tôle introduits dans le second calculateur neuronal de force de cambrage, comprennent au moins :
- la largeur de la tôle en entrée de l'outil; et
- l'épaisseur de la tôle en entrée d'outil.

De plus, les paramètres représentatifs des conditions de fonctionnement de l'outil, entrés dans ce second calculateur neuronal comprennent au moins des parmètres représentatifs de la géométrie de l'outil, c'est à dire par exemple le bombé des cylindres.

Par ailleurs, et comme on peut le voir sur cette figure, ce second calculateur neuronal 15 reçoit également la force de laminage délivrée par le premier calculateur neuronal 14.

Bien entendu, d'autres paramètres représentatifs de la tôle en entrée et en sortie de l'outil et d'autres paramètres représentatifs des conditions de fonctionnement de l'outil, tels que par exemple la température de la tôle et/ou de l'outil, etc... peuvent également être introduits dans ces calculateurs neuronaux.

De plus, un troisième calculateur désigné par la référence générale 16 sur cette figure 4, peut également être connecté à l'entrée du premier calculateur neuronal.

Ce troisième calculateur 16 est en fait un calculateur classique d'estimation de force de laminage à base de modèles physiques connecté à ce premier calculateur neuronal de force de laminage, pour introduire dans celui-ci une valeur d'estimation de cette force de laminage, déterminée de manière connue à l'aide d'un ou de plusieurs modèles physiques classiques déjà utilisés dans l'état de la technique, pour ce type de calcul.

Un quatrième calculateur désigné par la référence générale 17 sur la Fig.4, peut également être utilisé pour introduire dans le second calculateur neuronal de force de cambrage, une valeur d'estimation de la force de cambrage déterminée à partir d'un ou de plusieurs modèles physiques intégrés dans ce quatrième calculateur et déjà utilisés dans l'état de la technique pour ce type de calcul.

On conçoit donc que le dispositif selon l'invention permet de déterminer des valeurs de consigne de forces de laminage et de cambrage pour le préréglage de l'outil d'écrouissage, de manière extrêmement précise, sans nécessiter de développements mathématiques lourds pour déterminer les modèles physiques du procédé de laminage dans le cas de l'outil d'écrouissage.

Après la phase d'apprentissage, les calculateurs neuronaux permettent de délivrer des valeurs de consigne qui se rapprochent des valeurs optimales de pilotage de l'outil, de sorte les boucles de régulation du fonctionnement des moyens d'application de force correspondants peuvent fonctionner de manière plus précise, ce qui se traduit par une réduction des pertes de matière.

## Revendications

1. Dispositif de commande d'un outil d'écrouissage (1) par laminage léger d'une tôle, du type comportant des moyens (2,3) d'application d'une force de laminage sur la tôle, dont le fonctionnement est piloté par une boucle de régulation (6) comprenant des moyens (7) d'entrée d'une valeur de consigne de force de laminage, des moyens (8) de mesure d'au moins un paramètre réel caractéristique de l'écrouissage de la tôle en sortie d'outil, des moyens (9) de comparaison dudit paramètre réel à une valeur de référence prédéterminée (10) et des moyens (11,12) de correction de la valeur de consigne en fonction du résultat de la comparaison, caractérisé en ce que les moyens d'entrée (7) de la valeur de consigne de force de laminage comprennent un premier calculateur neuronal de force de laminage (14), recevant en entrée des paramètres représentatifs de la tôle, en entrée et en sortie d'outil (1), et des paramètres représentatifs des conditions de fonctionnement de l'outil.

2. Dispositif selon la revendication 1, l'outil comportant des moyens (4,5) d'application d'une force de cambrage sur la tôle dont le fonctionnement est piloté par une boucle de régulation (6) comprenant des moyens (7) d'entrée d'une valeur de consigne de la force de cambrage, des moyens (8) de mesure d'au moins un paramètre réel caractéristique de la planéité de la tôle en sortie d'outil, des moyens (9) de comparaison dudit paramètre réel à une valeur de référence prédéterminée (10) et des moyens (11,12) de correction de la valeur de consigne en fonction du résultat de la comparaison, caractérisé en ce que les moyens d'entrée (7) de la valeur de consigne de force de cambrage comprennent un second calculateur neuronal de force de cambrage (15), recevant en entrée des paramètres représentatifs de la tôle en entrée et en sortie de l'outil (1), des paramètres représentatifs des conditions de fonctionnement de l'outil et la force de laminage délivrée par le premier calculateur neuronal de force de laminage (14).

3. Dispositif selon la revendication 1 ou 2, caractérisé en ce que le ou chaque calculateur neuronal est un calculateur multicouches comportant une couche de neurones d'entrée, au moins une couche cachée de neurones et une couche de neurones de sortie.

4. Dispositif selon la revendication 3, caractérisé en ce que le ou chaque calculateur neuronal est un calculateur à rétropropagation du gradient.

5. Dispositif selon l'une quelconque des revendications précédentes, caractérisé en ce que les paramètres représentatifs de la tôle en entrée et en sortie de l'outil, introduits dans le premier calculateur neuronal de force de laminage, comprennent au moins :
- l'épaisseur de la tôle en entrée de l'outil;
- les caractéristiques mécaniques de la tôle en entrée d'outil;
- l'allongement désiré de la tôle en sortie de l'outil; et
- le fini de la tôle en sortie d'outil.

6. Dispositif selon l'une quelconque des revendications précédentes, caractérisé en ce que les paramètres représentatifs des conditions de fonctionnement de l'outil, introduits dans le premier calculateur neuronal de force de laminage, comprennent au moins :
- le nombre de passages de la tôle dans l'outil;
- des conditions de lubrification de la tôle lors de son passage dans l'outil;
- les paramètres représentatifs de la géométrie initiale de l'outil;
- les caractéristiques d'usure de l'outil;
- la vitesse de travail de l'outil; et
- la force de traction exercée sur la tôle.

7. Dispositif selon l'une quelconque des revendications 2 à 6, caractérisé en ce que les paramètres représentatifs de la tôle, introduits dans le second calculateur neuronal de force de cambrage, comprennent au moins :
- la largeur de la tôle en entrée de l'outil; et
- l'épaisseur de la tôle en entrée de l'outil.

8. Dispositif selon l'une quelconque des revendications 2 à 7, caractérisé en ce que les paramètres représentatifs des conditions de fonctionnement de l'outil, introduits dans le second calculateur neuronal de force de centrage, comprennent au moins :
- des paramètres représentatifs de la géométrie de l'outil.

9. Dispositif selon l'une quelconque des revendications précédentes, caractérisé en ce qu'un troisième calculateur (16) d'estimation de la force de laminage à base de modèles physiques est relié au premier calculateur neuronal de force de laminage (14).

10. Dispositif selon l'une quelconque des revendications 2 à 9, caractérisé en ce qu'un quatrième calculateur (17) d'estimation de force de cambrage à base de modèles physiques est relié au second calculateur neuronal de force de cambrage (15).

11. Dispositif selon l'une quelconque des revendications précédentes, caractérisé en ce que ledit au moins un paramètre réel caractéristique de l'écrouissage de la tôle en sortie d'outil, est le taux d'allongement de celle-ci.
